Europäisches Patentamt

European Patent Office

Office européen des brevets

(11) Publication number: **0 043 803**
**B1**

(12)

# EUROPEAN PATENT SPECIFICATION

(45) Date of publication of patent specification: **16.05.84**

(51) Int. Cl.³: **A 01 B 51/02, B 60 K 5/08**

(21) Application number: **81830078.2**

(22) Date of filing: **12.06.81**

(54) **Mini-bidirectional tractor-motorhoe.**

(30) Priority: **12.06.80 IT 4894480**

(43) Date of publication of application:
**13.01.82 Bulletin 82/02**

(45) Publication of the grant of the patent:
**16.05.84 Bulletin 84/20**

(84) Designated Contracting States:
**AT BE CH DE FR GB LI LU NL**

(56) References cited:
**DE-A-1 780 052**
**DE-A-2 530 682**
**US-A-3 122 850**
**US-A-3 884 310**

(73) Proprietor: **Calabro, Giovanni**
**Via Carlo Mezzacapo, 39**
**Roma (IT)**

(72) Inventor: **Calabro, Giovanni**
**Via Carlo Mezzacapo, 39**
**Roma (IT)**

Courier Press, Leamington Spa, England.

## Description

The invention concerns a bidirectional mini-tractor-motorhoe.

It is known that the use of motorhoes of any power in agriculture very often leads to serious injury to the operators. In factor, motorhoes are guided and oriented during operation by an operator who follows the machine on foot and who, when the cutter is stuck in hard soil, must release it with lateral displacements caused manually. Accidents are very likely to occur during this step to cause serious injuries to the lower limbs.

It should be noted that in low power motorhoes, the wheels which move the machine to the operation area may be removed while the soil is being hoed. In higher power motorhoes, the wheels cannot be removed during operation. This makes it impossible for the cutter to go deeply into the soil, since the wheels on the side prevent operation in depth.

It should also be noted that the operator who follows the motorhoe between two rows of plants often finds himself in difficulty when he must make a U-turn at the end of each row.

In current motorhoes, the cutter operates at less than 50% efficiency since it often idles, not being assisted by any thrust or pulling operation.

Finally, since the motorhoe must be steered by the operator, said operator undergoes considerable physical stress, which constrains him to an often limited output.

The invention thus aims to propose a device which places the operator in a condition where he is always protected against accident, where he can operate with the cutter at considerable depth, where U-turns are eliminated, and where the output of the cutter in rotation is complete and the daily output of the operator is considerably greater, while the physical stress on the operator is considerably reduced.

The invention achieves this goal by realizing a device to couple two agricultural machines, one with a cutter and one with drive wheels, each equipped with a motor and handle-bar grips for steering, characterised in that said device consists of two steel tubes inserted telescopically one in the other, each connectable to one of the two machines, so that they are hingeable or fixed relative to each other, one free end of each tube being equipped with coupling means for the respective agricultural machine, and a rotating seat being provided between the ends of the device, the device being further equipped near each end with control means for each motor.

Said steel tubes inserted telescopically one in the other, each joined to one of the two machines, are provided by the invention in said position to allow each of the two machines to handle the unevenness of the terrain independently and so to ensure greater stability for mini-tractor-motorhoe.

Each of the ends of said two tubes is provided with means to couple the device to the respective machine, so as to allow a directional articulation by acting on said respective handlebar grips. These also allow the mini-tractor-motorhoe to be broken down into parts for separate transport, even on donkey back, to areas inaccessible to tractors and to vehicles in general.

Said seat, adjustable in height, allows the operator to reverse his driving from one to the other direction, with no U-turn of the mini-tractor-motorhoe.

In order to provide the operator with control means for the motors of each machine in both directions, near each external end of said tubes there are command and control devices represented by two acceleration pedals, one for each motor, and by a brake pedal, acting on the drive wheels only. The automatic clutches disengage and engage in the normal, well known fashion.

The double application of the two machines (cutter and wheels) to the device according to the invention allows complete use of the mechanical energy produced, which is transformed into agricultural work. In fact, the motor with wheels provides the controlled and necessary thrust or drag force to the motor with the cutter, in order to hasten advancement and to overcome the dead points often presented to traditional motorhoes when the cutter, stuck in the soil, is blocked.

The object of the invention will be described in more detail below with reference to a preferred embodiment shown in an exemplificative and non-limiting way in the attached drawings, where the figures show:

Figure 1, a schematic frontal view of the bidirectional mini-tractor-motorhoe according to the invention;

Figure 2, a schematic view from above of the two tubes of the device for coupling the two machines with the support tubes inserted telescopically;

Figure 3, a schematic view of the distribution of the command pedals;

Figure 4, an enlarged prospective view of the device of Figure 1, where for the sake of clarity the two machines have been removed;

Figures 5, 6, 7, particular views of the scheme in Figure 3.

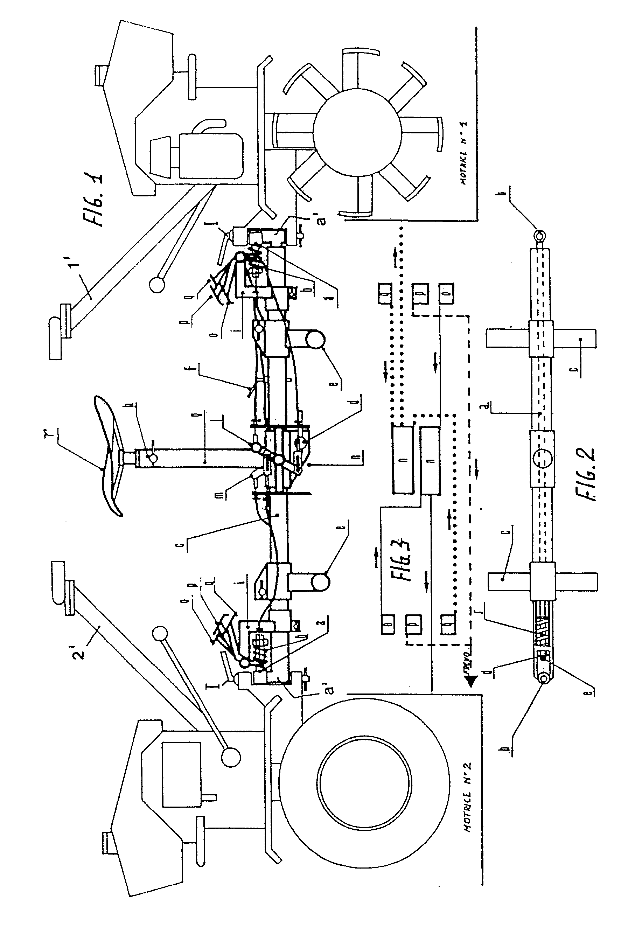

In Figure 1, the cutter of the motorhoe has been indicated with 1 and the drive wheels with 2, where the latter act in thrust or in traction depending on the direction of motion. The framework of the device has been indicated with *c*, consisting of two telescopically inserted tubes, one of which is shown with a dotted line (Figure 2). The pin blocking the two tubes is indicated with *f*. At the middle of the device the seat-bearing tube *g* is mounted, with seat *r*, adjustable in height, blocked by screw *h*. The operator's foot rests have been indicated with *e*.

The seat-bearing tube *g* is mounted on a rod to which are applied supports and transmission levers for said control devices for each motor 1, 2 (discussed below). These supports and levers have been indicated generically with n. Said rod slides telescopically along an external tube of framework c so that the operator can mount or dismount seat r from both directions. The rod may be fixed in position by means of screw d.

In correspondence with the free end of each of the two tubes comprising the framework c, a sleeve a' is provided for attaching the respective machine 1, 2 by means of a bolt l which realizes the directional articulation of each machine, governable by means of handle bars 1', 2'.

Near each sleeve a' a support rod i is mounted for said control devices for each motor 1, 2. These control devices consist of acceleration pedals o, q and brake pedals p, placed both on the side of the cutter and on that of the drive wheels.

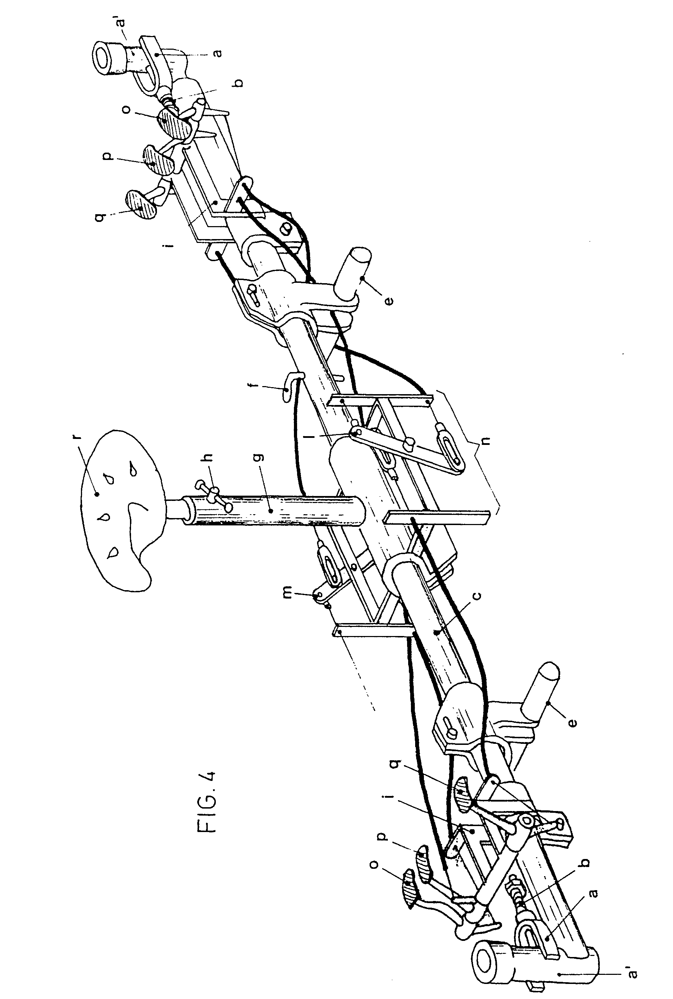

As shown more clearly in Figure 4, the pedal q on the left of the operator on the side of machine 1 governs acceleration of machine 1 by means of the flexible cable connected by means of a slit joint to the lower end of the lever l, with fulcrum in the center. In operating machine 1, the lever l slides with a dowel, inside the slit of the joint at the top of the flexible cable connected to the acceleration pedal q on the left of machine 2. In this way, both acceleration pedals q on the operator's left act independently on the same machine 1, where one of the slit joints functions in traction and the other idles. The same applies to the acceleration pedals o on the operator's right which, by means of analogous leverage supported by lever m, govern independently machine 2.

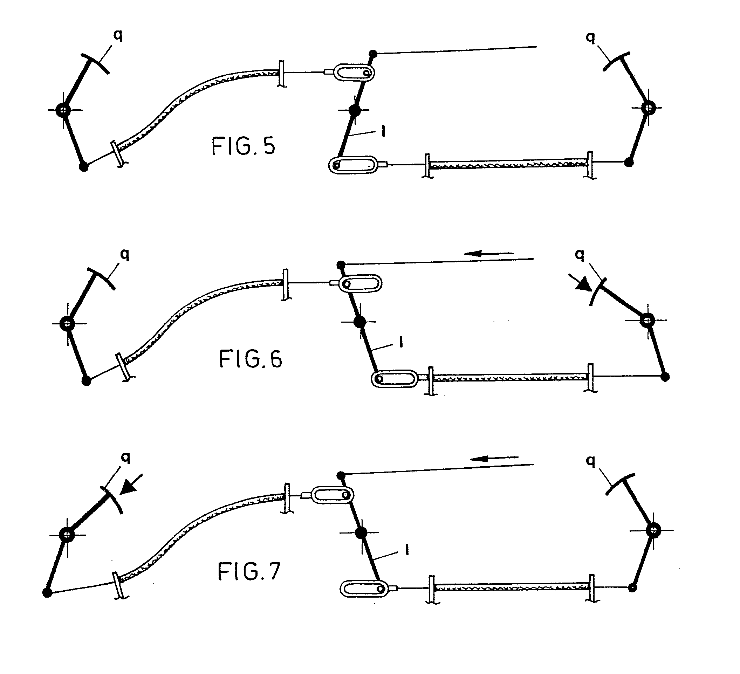

Figures 5, 6, 7 show more clearly the operation of left pedal q, and by analogy right pedal o.

In Figure 5, pedals q and o are in the rest position.

In Figure 6, the acceleration pedal q of machine 1 is in the acceleration phase; note how the upper dowel of lever 1 has completed an idle stroke along the slit of the joint connected to the pedal q of machine 2, which has remained inactive.

In Figure 7, in analogy with Figure 6, pedal q of machine 2 is in operation while pedal q of machine 1 is inactive.

## Claims

1. Device to couple two agricultural machines, one with a cutter and one with drive wheels, each equipped with a motor (1, 2) and handle-bar grips (1', 2') for steering, characterised in that said device consists of two steel tubes (c) inserted telescopically one in the other, each connectable to one of the two machines so that they are hingeable or fixed relative to each other, one free end of each tube being equipped with coupling means (a') for the respective agricultural machine, and a rotating seat (r) being provided between the ends of the device, the device being further equipped near each end with control means (q, o, p) for each motor.

2. Device as claimed in claim 1, characterised by the fact that each of the two machines (1, 2) is coupled to a sleeve (a), joined to the free end of said tubes (c), with coupling (l) which allows clamping or hinging of the device to the machines and detachment for separate use of the two machines (1, 2) and/or for separate transport of them and the device (c).

3. A device as claimed in claim 1, characterised by the fact that said control means for each motor (1, 2) consist of two first acceleration pedals (g) for the first motor and two second acceleration pedals (o) for the second motor placed respectively on the operator's left and right, both when he is turned toward the first motor (1) and when he is turned toward the second motor (2), each first pedal (q) acting independently of the other first pedal (q) and each second pedal (o) acting independently of the other second pedal (o), each pair however always operating on only one of the two motors (1, 2).

4. Device as claimed in claim 3, characterised by the fact that the first acceleration pedals (q) acting on the first motor (1) and the second pedals (o) acting on the second motor (2) operate independently on the respective motor by means of flexible cables connected with slit joints to the upper and lower ends respectively of a lever (l, m) with fulcrum in the center, each of the slit joints thus operating alternatively in traction or in idle.

5. Device as claimed in claim 1, characterised by the fact that between the first and second acceleration pedals (q, o) on the cutter machine side (1) and between the acceleration pedals (q, o) on the drive wheel machine side (2) there is a pedal (P) acting to brake the drive wheels (2) only, each of the two pedals (p) acting independently from one another.

6. Device as claimed in claim 1, characterised by the fact that the seat (r) is mounted on a tube (g) which is mounted via means enabling the seat to be moved as a section along the outer tube of the framework (c) and locked in position by means of a screw (d).

## Patentansprüche

1. Vorrichtung zur paarweisen Verbindung zweier Ackerbaumaschinen, eine mit einer Fräse und eine mit orientierbaren Rädern, beide mit einem Motor (1, 2) und einem Kurbelgriff (1', 2') zur Richtungssteuerung. Diese Vorrichtung besteht aus zwei Strahlrohren (c), die wie ein Telekop eines in das andere geschoben sind, so dass jedes fest mit einer der Maschinen verbunden werden kann. So ist es möglich, dass die eine unabhängig von der anderen artikuliert oder blockiert werden kann, da eine der freien Enden jedes Rohres Verbindungsmittel (a') zur ieweiligen Ackerbaumaschine hat, und ein drehbarer Sitz (r) zwischen den äussersten Enden der Vorrichtung montiert ist und die Vorrichtung ausserdem in der Nähe jedes Endes Kontrollmittel (q, o, p) für die Betätigung jedes Motors hat.

2. Vorrichtung nach Forderung 1, die davon gekennzeichnet ist, dass jede der beiden Maschinen (1, 2) mit einem kleinen Rohr verbunden ist, vereint mit dem freien Ende dieser Rohre (c), mit einem Kupplungsgelenk (I), das die Festmachung oder Bewegung der Vorrichtung mit den Maschinen oder die Trennung zum getrennten Gebrauch der beiden Maschinen (1, 2) und/oder den getrennten Transport der Maschinen und der Vorrichtung (c) erlaubt.

3. Vorrichtung nach Forderung 1, die davon gekennzeichnet ist, dass die vorgenannten Kontrollmittel für den Antrieb jedes Motors (1, 2) aus den ersten zwei Gashebeln für den ersten Motor und aus den zweiten zwei Gashebeln für den zweiten Motor bestehen, die sich jeweils links und rechts von dem Operateur befinden, sei es, dass er dem ersten Motor zugewendet ist (1), sei es, dass er dem zweiten Motor zugewendet ist (2), da jedes erste Pedal (q) unabhängig von den anderen ersten Pedal ist (q) und jedes zweite Pedal (o) unabhängig von dem anderen zweiten Pedal ist (o); jedes Paar operiert immer nur auf einem der beiden Motoren (1, 2).

4. Vorrichtung nach Forderung 3, die davon gekennzeichnet ist, dass die ersten Gashebel (q) die auf den ersten Motor wirken (1) und die zweiten Gashebel (o) die auf den zweiten Motor wirken (2) unabhängig voneinander auf den jeweiligen Motor operieren. Dies geschieht durch beigsame Kabel die miteinander durch Oesengelenke am oberen und am unteren Ende eines jeweiligen Hebelchens (I, m), das sich in der Mitte befindet, verbunden sind; jedes der Oesengelenke operiert so wechseld under Traktion oder unbelastet.

5. Vorrichtung nach Forderung 1, die davon gekennzeichnet ist, dass sowohl zwischen den ersten und zweiten Gaspedalen (q, o) auf der Seite der Fräse (1) der Maschine, als auch zwischen den Gaspedalen (q, o) auf der Seite der Antriebsräder (2) der Maschine, ein Pedal vorgesehen ist (p) das als Bremse auf die Antriebsräder wirkt (2), da jedes der beiden Pedale (p) unabhängig von dem anderen operiert.

6. Vorrichtung nach Forderung 1, die davon gekennzeichnet ist, dass der Sitz (r) auf einem Rohr (g) montiert ist, das mit Mitteln verschoben wird, die den Sitz eine Strecke entlang des ausseren Rohres des Gestells (c) entlang bewegen und der durch eine Schraube (d) blockiert wird.

**Revendications**

1. Dispositif pour accoupler deux machines agricoles, l'une avec une fraise et l'autre avec des roues directionnelles, chacune pourvue d'un moteur (1, 2) et de poignées (1', 2') qui permettent la conduite directionnelle. Le dispositif est caractérisé par deux tubes d'acier (c) encastrés l'un dans l'autre; chaque tube est relié à l'une des deux machines de façon à ce qu'elles puissent être articulées ou bloquées l'une par rapport à l'autre, une extrémité libre de chaque tube étant pourvue de moyens d'assemblage (a') pour la respective machine agricole; un siège pivotant (r) est monté entre les extrémitées du dispositif, celui-ci étant de plus pourvu, près de chaque extrémité, de moyens de contrôle (q, o, p) afin de commander chaque moteur.

2. Dispositif d'après la revendication 1, caractérisé par le fait que chaque machine peut être accouplée (1, 2) à un canot (a) solidaire d'une extrémité libre de chaque tube (c), avec articulation à amorce (I) qui permet la fixation ou l'articulation du dispositif aux machines et une séparation facile pour l'emploi séparé des deux machines (1, 2) et/ou le transport séparé de celles-ci et du dispositif (c).

3. Dispositif d'après la revendication 1, caractérisé par le fait que les moyens de contrôle pour commander chaque moteur (1, 2) sont constitués par deux premières pédales d'accélération (q) pour le premier moteur et par deux autres pédales d'accélération (o) pour le second moteur, situées respectivement à gauche et à droite de l'opérateur, soit qu'il soit tourné vers le premier moteur (1), soit vers le second (2), chaque première pédale (q) fonctionnant indépendamment de l'autre première pédale (q) et chaque seconde pédale (o) fonctionnant indépendamment de l'autre seconde pédale (o), chaque couple agissant toujours de toute façon seulement sur l'un des deux moteurs (1, 2).

4. Dispositif d'après la revendication 3, caractérisé par le fait que les premières pédales d'accélératio (q) agissant sur le premier moteur (1) et les secondes pédales d'accélération agissant sur le second moteur (2) fonctionnent indépendamment sur le moteur respectif grâce à de petit câbles flexibles reliés par des joints à boutonnière à l'extrémité supérieure et inférieure d'un respectif petit levier (I, m), avec un fulcrum au minieu, chacun des joints à boutonnière agissant de cette façon alternativement en traction ou à vide.

5. Dispositif d'après la revendication 1, caractérisé par le fait qu'une pédale (p) aie été prévue aussi bien entre les premières et les secondes pédales d'accélération (q, o) du côté de la fraise (1) de la machine qu'entre les pédales d'accélération (q, o) du côté des roues motrices (2) de la machine. Cette pédale agit comme un frein seulement sur les roues motrices (2), chaque pédale (p) agissant indépendamment l'une de l'autre.

6. Dispositif d'après la revendication 1, caractérisé par le fait que le siège (r) est monté sur un tube (*g*) que l'on déplace selon un dispositif qui permet de déplacer le siège le long du tube extérieur du châssis (*c*). Ce meme siège est bloqué en position par une vis (*d*).

FIG. 1

FIG. 2

FIG. 3

MOTRICE N° 1

MOTRICE N° 2

FIG. 4

FIG. 5

FIG. 6

FIG. 7